(19) **Europäisches Patentamt / European Patent Office / Office européen des brevets**

(11) **EP 1 544 790 B1**

(12) **EUROPEAN PATENT SPECIFICATION**

(45) Date of publication and mention
of the grant of the patent:
**12.09.2007 Bulletin 2007/37**

(51) Int Cl.:
***G06T 1/00*** (2006.01)

(21) Application number: **04029701.2**

(22) Date of filing: **15.12.2004**

(54) **Method and system for generating characterizing information descriptive of a selected text block**

Méthode et système pour produire de l'information caractérisante descriptive d'un bloc de texte sélectionné

Verfahren und System zur Erzeugung von kennzeichnenden Informationen, die einen vorgewählten Text-Block beschreiben

(84) Designated Contracting States:
**DE FR GB**

(30) Priority: **15.12.2003 US 736077**

(43) Date of publication of application:
**22.06.2005 Bulletin 2005/25**

(73) Proprietor: **PITNEY BOWES INC.**
**Stamford, CT 06926-0700 (US)**

(72) Inventors:
- **Pintsov, Leon A.**
  **West Hartford**
  **Connecticut 06117 (US)**
- **Campagna, Matthew J.**
  **Ridgefield**
  **Connecticut 06877 (US)**
- **Lelli, Danny**
  **Kanata**
  **Ontario K2M 1E8 (CA)**

(74) Representative: **HOFFMANN EITLE**
**Patent- und Rechtsanwälte**
**Arabellastrasse 4**
**81925 München (DE)**

(56) References cited:
**EP-A- 1 544 791          WO-A- 00/65541**
**US-A1- 2001 040 979     US-A1- 2003 053 653**

- **CULLEN M ET AL: "Reading encrypted postal indicia" DOCUMENT ANALYSIS AND RECOGNITION, 1995., PROCEEDINGS OF THE THIRD INTERNATIONAL CONFERENCE ON MONTREAL, QUE., CANADA 14-16 AUG. 1995, LOS ALAMITOS, CA, USA,IEEE COMPUT. SOC, US, vol. 2, 14 August 1995 (1995-08-14), pages 1018-1023, XP010231073 ISBN: 0-8186-7128-9**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The subject invention relates to the problem of providing a robust, compact characterization of a block of printed text which will distinguish the selected block of text from other such blocks. More particularly, it relates to the problem of providing an image-based characterization of a printed address block which can be incorporated into a digital postal indicium. (By "robust and compact" herein is meant information which is small enough in quantity to be incorporated into postal indicia yet will identify a text block, and distinguish it from other text blocks, with sufficient reliability to deter "rubber stamp" counterfeiting; despite errors introduced by the printing and/or scanning processes.)

Postage metering systems account for postage and other values such as parcel delivery service charges and tax stamps, and print indicia representative of such values as proof of payment. To protect against counterfeiting of indicia, modern digital postage metering systems use encryption technology. The postage value and other information relating to an indicium, preferably, are digitally signed or otherwise cryptographically authenticated, and the information and signature are incorporated into the digital postal indicium.

Digital postal indicia using encryption technologies are extremely secure. In general, without knowledge of the proper encryption keys, it is essentially impossible to produce a counterfeit digital indicium, However, digital indicia are subject, as are all postal indicia, to "rubber-stamp" counterfeiting when a valid indicium is scanned and reproduced on multiple mail pieces. To prevent such "rubber-stamp" counterfeiting, it is known to incorporate information from the address block of the mail piece into the postal indicium. Because space on an envelope is limited, typically only a small portion of the information in the address block will be incorporated into the indicium.

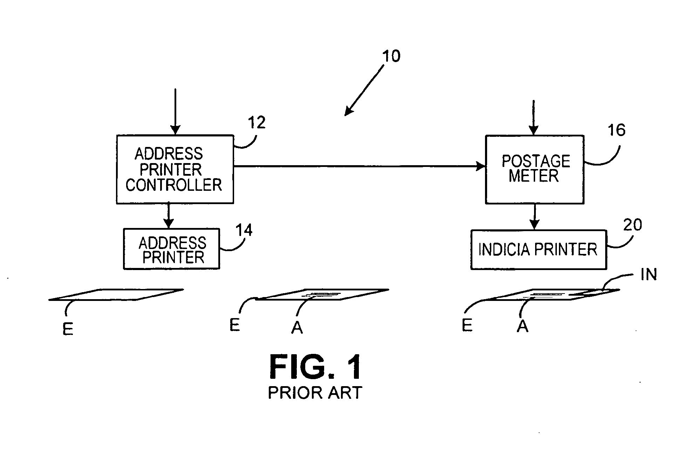

In Figure 1, prior art mailing system 10 includes address printer controller 12, address printer 14, postage meter 16, and indicia printer 20. Address printer controller 12 receives address information from a data processing system (not shown), generates a bitmap representative of the nominal, or "pristine", image of the address block, and controls address printer 12 to print address block A, representative of the address, on envelope E. Meter 16 receives postage information, and other information, from the data processing system. Meter 16 also receives characterizing information descriptive of block A from address printer controller 12. The information received can be either text-based or image-based. Text-based information is descriptive of the words or characters making up to the address, (e.g., ASCII code) while image-based information is descriptive of the actual printed image in the address block. Meter 16 combines the characterizing information with the postage value and other information, typically digitally signs the combination, generates a bitmap representative of an indicium including the digitally signed combination, and controls indicia printer 20 to print indicium IN on envelope E. When the mail piece is sent to a postal service location the address block can be scanned again, and the information regenerated from the scanned address block compared to information recovered from indicium IN, without the need to communicate with the remote mailing system; thus tying indicium IN to the particular mail piece. (Note that since indicium IN is cryptographically linked to the address on the mail piece, printer 20 need not be a secure printer; but can be a general purpose printer which can be controlled by other devices for other uses.) Commonly assigned, U.S. Patent application publication number 2004/0128254 entitled *System And Method For Mail Destination Address Information Encoding Protection And Recovery In Postal Payment* in the name of Leon A. Pintsov discloses a system similar to that of the Figure 1 using text-based characterizations of the address block.

While useful for its intended purpose, problems remain with the system of Figure 1 and similar systems. It has proven difficult to reliably recover textual information from address blocks during the validation process using available optical character recognition (OCR) techniques. Attempts to increase the robustness of text-based systems by incorporation of additional information and/or the use of error correcting codes has resulted in undesirable increases in indicia size and computational complexity. Use of image-based characterizing systems, such as those described in the above mentioned co-pending application publication number 2004/0128254 has been proposed and is believed to substantially overcome some of the problems of text-based systems. However, to date, no characterizing algorithm is known to be sufficiently robust for all possible applications. This problem is exacerbated by the variation in robustness of characterizing algorithms with respect to the particular text block to be characterized.

US 2001/0040979 A1 discloses that watermark and pattern detection can be improved by compensating for artifacts introduced into an image by a printer and/or scanner through which the image has passed. Prior to watermark or pattern detection, the image is filtered or modified to compensate for artifacts introduced by the printer and/or scanner. Some scanners automatically compensate for artifacts introduced by the scanner by using a calibrated tone map. The automatic compensation provides an image from which, a watermark can be easily read. However, generally the user is provided with an interface which can be used to change certain parameters such as contrast and intensity. The changes made by the user change the compensation (i.e. the tone map) applied to the image. If the user changes the compensation applied to the image it can affect the ability to read the watermark. A system is disclosed which reverses any compensation introduced by the user so that the watermark or pattern can be more easily read. Another system takes into consideration that some printers and scanners have transfer functions which differ in the "x" and "y" directions. Thus, the compensation introduced by the filter can differ in the "x" and "y" directions. In one system, a scanner introduces aliasing frequencies into an image. Detection is improved by selectively removing certain frequencies. In another system, the filter compensates for fact that the scanner frequency response falls off at higher frequencies.

US 2003/0053653 A1 discloses a watermark system including an embedder, detector, and reader. The watermark embedder encodes a watermark signal in a host signal to create a combined signal. The detector looks for the watermark signal in a potentially corrupted version of the combined signal, and computes its orientation. Finally, a reader extracts a message in the watermark signal from the combined signal using the orientation to approximate the original state of the combined signal. While adapted for images, video and audio, the watermark system applies to other electronic and physical media. For example, it can be applied to mark graphical models, blank paper, film and other substrates, texturing objects for ID purposes, etc.

In accordance with the subject invention, there is provided a method for generating characterizing information for a selected block of printed material (such as an address printed on an envelope or other mail piece),where said printed material is to be scanned from an object and compared with said characterizing information at a location distant from where said block is printed. The method comprises: a) printing said block on an object; b) applying each algorithm from a predetermined set of characterizing algorithms to a pristine image of said block of printed material to generate a plurality of corresponding first characterizing information descriptors for said block; c) determining estimates of robustness for each of said algorithms; and d) selecting, as a function of said estimates, a combination of descriptors generated by a corresponding combination of said algorithms as said characterizing information.

In an embodiment, the estimates are determined by: a) filtering a pristine digital image of said block of printed material with a print/scan filter to create a filtered image, said print/scan filter simulating the expected transformation of said pristine image by printing and scanning processes; b) applying each algorithm from said predetermined set of characterizing algorithms to said filtered image to generate a plurality of corresponding second characterizing information descriptors for said filtered digital image; and c) for each algorithm from said predetermined set of characterizing algorithms, comparing corresponding said first and said second descriptors to determine said estimates of robustness.

In an embodiment, the estimates are determined by: a) filtering a pristine digital image of said block of printed material with a print/scan filter to create a filtered image, said print/scan filter simulating the expected transformation of said pristine image by printing and scanning processes; b) further filtering said filtered image with one or more defacing filters, said defacing filters simulating simulate blots, smudges, failure of print elements or scanner sensors, or other, similar occasional events which can not easily be incorporated into said print/scan filter to create one or more defaced images; c) applying each algorithm from said predetermined set of characterizing algorithms to said filtered image and to said one or more defaced images to generate a plurality of corresponding second characterizing information descriptors for said filtered digital image and one or more pluralities of defaced image descriptors corresponding to each of said one or more defaced images; and d) for each algorithm from said predetermined set of characterizing algorithms, comparing corresponding first characterizing information descriptors with corresponding second characterizing information descriptors and with each of said one or more corresponding defaced image descriptors to determine said estimates of robustness.

In an embodiment, the selected descriptor is one of the second descriptors.

In an embodiment, an indicium including the characterizing information is verified by: a) scanning images of said indicium and said other printed material from said object; b) inputting a combination of first descriptors comprising the characterizing information from said indicium image; c) identifying characterizing algorithms used to generate said first descriptors; d) applying said identified algorithms to said image of said other material to generate second descriptors; e) comparing said first and second descriptors; and f) if said first and second descriptors do not match, diverting said object for further inspection.

An embodiment of the present invention provides a robust and flexible method and system for characterizing particular text blocks.

Objects and advantages of embodiments will be apparent to those skilled in the art from consideration of the detailed description set forth below and the attached drawings.

The present invention is illustrated by way of example, and not by way of limitation, in the figures of the accompanying drawings and in which like reference numerals refer to similar elements and in which:

Figure 1 shows a schematic block diagram of a prior art mailing system.

Figure 2 shows a schematic block diagram of a mailing system and a verification system in accordance with an embodiment.

Figure 3 illustrates a method for abstracting characterizing information descriptive of an address block from an image of the address block.

Figure 4 illustrates another method for abstracting characterizing information descriptive of an address block from an image of the address block.

Figure 5 illustrates another method for abstracting characterizing information descriptive of an address block from an image of the address block.

Figure 6 shows a flow diagram of the operation of the mailing system of Figure 2 in determining the robustness of algorithms for abstracting characterizing information in accordance with one embodiment of the subject invention.

Figure 7 shows a flow diagram of the operation of the mailing system of Figure 2 in selecting a robust combination of descriptors.

Figure 8 shows a flow diagram of the operation of the mailing system of Figure 2 in determining the robustness of algorithms for abstracting characterizing information in accordance with another embodiment of the subject invention.

Figure 9 shows a flow diagram of the operation of the mailing system of Figure 2 in determining the robustness of algorithms for abstracting characterizing information in accordance with another embodiment of the subject invention.

Figure 10 shows a flow diagram of the operation of the verification system of Figure 2 in verifying an indicium.

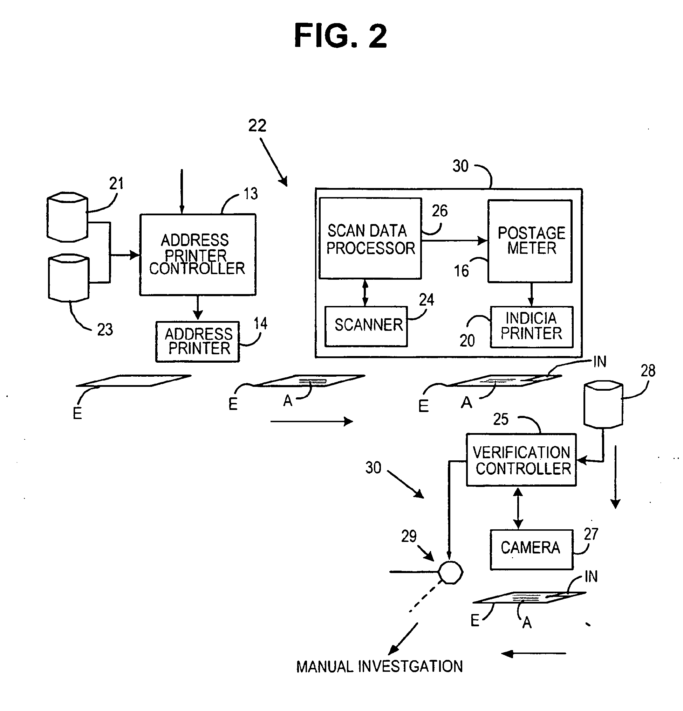

In Figure 2, mailing system 22 includes address printer controller 13, address printer 14, postage meter 16, and indicia printer 20, which are substantially similar to the corresponding prior art elements shown in Figure 1. System 22 differs in including data stores 21 and 23 communicating with controller 13 and in the manner in which controller 13 generates characterizing information. Data store 21 stores a plurality of characterizing of characterizing algorithms, as will be described further below, and data store 23 stores at least a print/scan filter which, when applied to the pristine image generates a filtered image which approximates the transformation of the pristine image by the printing and scanning processes. In other embodiments, data store 26 stores one or more defacing filters which simulate blots, smudges, failure of print elements or scanner sensors, or other, similar occasional events which can not easily be incorporated into said print/scan filter to create one or more defaced images. Together, meter 16, printer 20, form secure postal indicia printing system 22.

Figure 2 also shows verification controller 25, camera 27, data store 28, storing the characterizing of characterizing algorithms used in system 22, and diverter 29; which together comprise verification system 30 for comparing address block A with information recovered from indicium IN and diverting mail pieces which do not match, as described above. (System 30 is typically located at a postal facility distant from system 22.) Except as to programming of controller 25 to carry out the comparison algorithm of the subject embodiment, as will be described further below, operation of verification system 30 is substantially conventional and need not be described further here for an understanding of the subject embodiment.

Three methods for generation of image-based characterizing information which are believed to provide improved compactness and robustness have recently been developed by the assignee of the present application and are described below as illustrative of the type of characterizing algorithms which can be used with the subject embodiment. Numerous other algorithms will be apparent to those skilled in the art and particular choices of algorithms to be used form no part of the subject invention, except as may be recited in the claims.

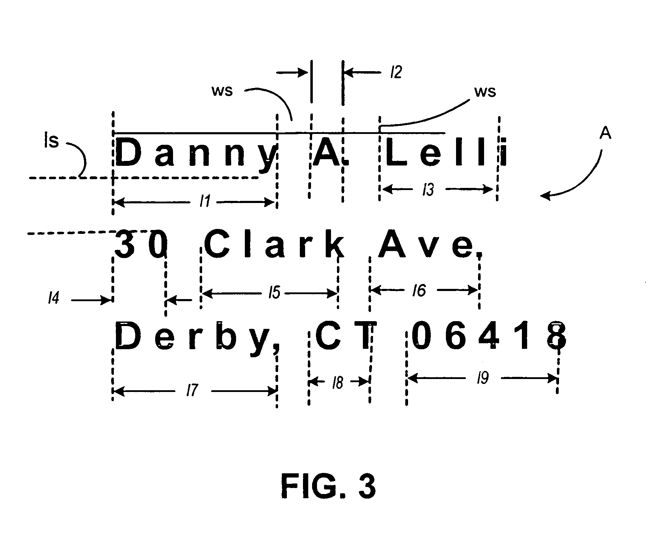

A characterizing algorithm where the characterizing information comprises measurements of the lengths of the individual words which make up address A, is shown in Figure 3. Address block A is parsed to identify individual words by first identifying line spaces Is by determining the occurrence of large amounts of horizontal white space between blocks of printed text, and then identifying word spaces *ws* by determining the occurrence of large amounts of vertical white space between blocks of printed text (as shown with respect the first line of address A). Word lengths /1 through /9 are then determined for address A. Preferably, word lengths are taken (measured in pixels) from the edges of word spaces *ws* (or the address edges) as shown, but can be taken in any convenient manner, such as along the midline of the words.

It is believed that using four or fewer bits per word would not be useful in postal applications. Thus, in a preferred embodiment, the number of bits used can be selected to encode all words in the address, and two control bits will be sufficient to indicate selection of five to eight bits per word to encode the length of the word. In other embodiments, a fixed number of words in the address, for example the first eight, can be scanned at a fixed number of bits per word; eight in this case, since control bits would not be needed to specify the number of bits per word.

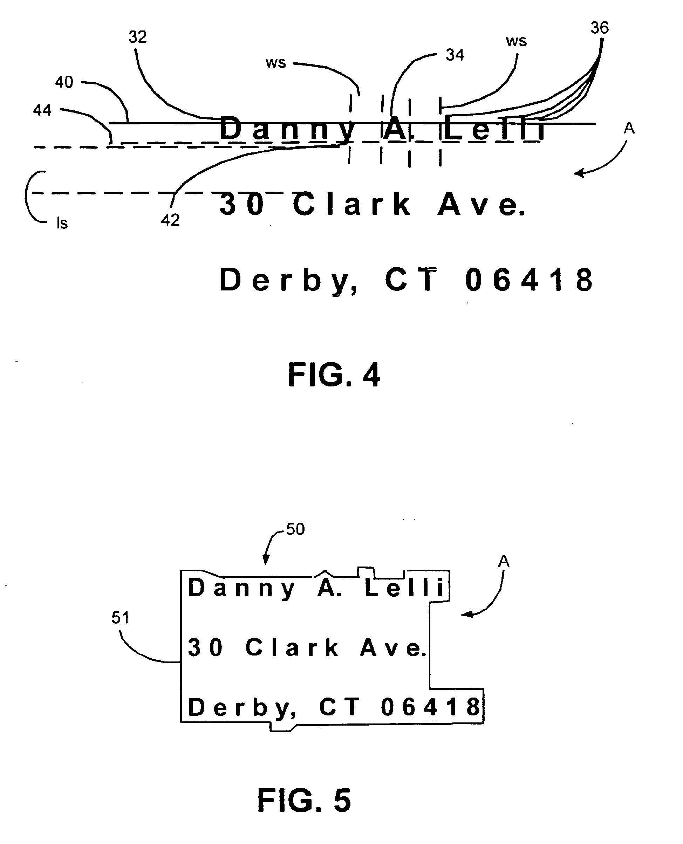

Another algorithm, where the characterizing information comprises measurements of the number of "outliers" in each word (or each line) which make up address A, is shown in Figure 4. (By "outliers" herein is meant ascenders or descenders and portions capitals of which project beyond thresholds, which are preferably determined by the upper and lower bounds of lower case letters without ascenders or descenders, such as "a", "c", "e", etc.) Address A is parsed to identify individual words, if necessary, by first identifying line spaces Is by determining the occurrence of large amounts of horizontal white space between blocks of printed text, and then identifying word spaces *ws* by determining the occurrence of large amounts of vertical white space between blocks of printed text (as shown with respect the first line of address A). Otherwise only the lines need be identified.

Assuming six bits are allocated per word, the number of upwards (+) and downwards (-) outliers per word can be encoded as "xxx/yyy" where x and y are binary digits and xxx is the number of (+) outliers and yyy is the number of (-) outliers.

Another algorithm in which the characterizing information comprises a description of the shape of the address block is shown in Figure 5. The shape is determined by using a conventional "best fit" scanning algorithm which encloses address block A with "best fit" closed curve 50. (It should be understood that various algorithms for generating a best fit curve will generate different curves. These differences do not affect the subject embodiment so long as the same algorithm is used to generate the curve whose description is incorporated into the indicium and to recover the curve from the address block when the indicium is validated.) Preferably, curve 50 is constrained. That is the manner in which a curve can be generated is limited so that the resulting curve is simplified and can be described with limited information. In Figure 5, curve 50 is formed from linked straight line segments, such as segment 51, which are limited to eight "directions", up (U), down (D), left (L), right I, up-right (UR), up-left (UL), down-right (DR), and down-left, (DL); viewed as being generated starting in the upper left corner of address block A and traveling clockwise around address block A. Preferably the curve 50 also accounts for spaces between characters, words and lines, treating these spaces as equivalent to printed space, so that curve 50 does not become too convoluted and require extensive descriptive information. It is within the skill of a person skilled in the art to provide an algorithm which will generate robust and compact characterizing information, as described above.

The characterizing information, i.e.. the description of curve 50, can be encoded in a number of ways. In the present example, the characterizing information consists of only the directions, without lengths, of each successive line segment.

Programming of a data processor to analyze scan data to perform imaging operations such as identifying lines and words, measuring the dimensions of letters and words or fitting a curve to an image in accordance with predetermined constraints are well known. Such operations are substantially routine in the character and general pattern recognition arts, for example. Techniques for carrying out such operations are also taught in: Handbook of Pattern Recognition and Image Processing edited by T Young and K-S Fu, Academic Press, 1986 and need not be discussed further here for an understanding of the subject embodiment.

Bit streams such as those describe above comprise ordered sequences of values which are typically, though not necessarily, numeric values associated with words in the address block. (Such bit streams are hereinafter sometimes "characterizing information descriptors" or "descriptors" and such values are hereinafter sometimes "characterizations".) As described above, when an indicium is validated, i.e., tied to the mail piece on which it is printed, at a distant postal facility the descriptor generated from the pristine image and incorporated into the indicium is compared with a descriptor recovered from an image scanned from the address block printed on the mail piece. It will be apparent to those skilled in the art that the recovered image will be transformed with respect to the pristine image by the characteristics of the printing and scanning processes, as well as possibly by the occurrence of occasional events such as blots. Thus, it is important that the algorithm used to characterize the address block be robust; that is that it produces descriptors that match sufficiently when an indicium is valid, and do not match for invalid indicia, despite small differences between the scanned image and the pristine image. It will also be apparent that the robustness of a particular characterizing algorithm can vary for different address blocks. (As a hypothetical example, the above described algorithm based on word length may be less robust for address blocks printed in a small font while algorithms based on the number of outliers, or address block shape may be relatively insensitive to font size.)

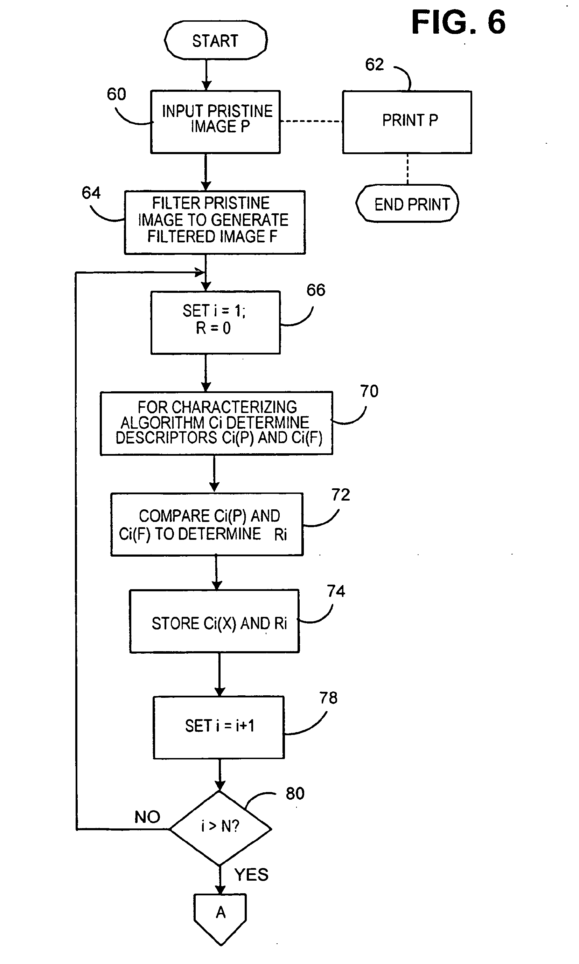

Figure 6 shows a flow diagram of the operation of controller 13 in accordance with one embodiment of the subject invention. At step 60, controller 13 obtains a pristine digital image, P, of address block A from a conventional source (not shown) such as a data processing system for preparing a bulk mailing. At step 62, controller 13 carries out printing of address block A in a conventional manner. Preferably, this printing process is carried out concurrently with the selection of a characterizing algorithm but, in other embodiments of the subject invention, printing of address block A can be carried out sequentially or by a separate processor.

At step 64, controller 13 inputs a print/scan filter which simulates the printing process of printer 14 and the scanning process to be carried out at a remote postal facility from data store 26 and applies it to image P to generate a filtered image, F, which approximates the image which will be scanned from the mail piece at the postal facility. And at step 66 sets index i equal to 1 and variable R equal to 0.

At step 66 controller 13 sets index $i = 1$ and variable $R = 0$, and at step 70 applies the ith characterizing algorithm $C_i$ to images P and F to generate corresponding descriptors $C_i(P)$ and $C_i(F)$; each comprising a sequence of M characterizations, or values, $C_i(P)_1$ through $C_I(P)_M$: $C_I(F)_1$ through $C_I(F)_M$. Then at step 72, controller 13 compares descriptors $C_i(P)$ and $C_i(F)$ to estimate a robustness value $R_I$ for the ith algorithm $C_i$, with respect to a particular image P.

The comparison at step 72 is carried out using a comparison algorithm associated with characterizing algorithm $C_I$ and which preferably is the same comparison algorithm used at the postal facility to compare the descriptor recovered from the scanned image with the descriptor incorporated into indicium IN. Preferably, the comparison is carried out on a characterization by characterization basis, comparing each $C_i(P)_j$ with the corresponding $C_i(F)_j$ to determine if the characterizations match; i.e., if they are "close enough" as defined by the particular comparison algorithm used. (As a hypothetical example, where the characterizations are word lengths they may be considered to "match" if the lengths differ by no more than one or two units; while if the characterizations are the number of outliers in a word a "match" may require exact equality.)

In a preferred embodiment, once descriptors $C_i(P)$ and $C_i(F)$ have been compared an estimate $R_i$ for the robustness of algorithm $C_i$, with respect to particular image P, is calculated as:

$$R_i = \text{Total no. of } [C_i(P)_j \text{ matching } C_i(F)_j]/M \text{ (for } j = 1 \text{ through } M);$$

where M is the number of characterizations generated by $C_i$. (Note that since robustness is defined with respect to small changes in the image, in normal use the filters, and the printing and scanning processes, will be such that the descriptors $C_i(P)$ and $C_i(F)$ will have the same number of characterizations. Otherwise an error condition is generated.)

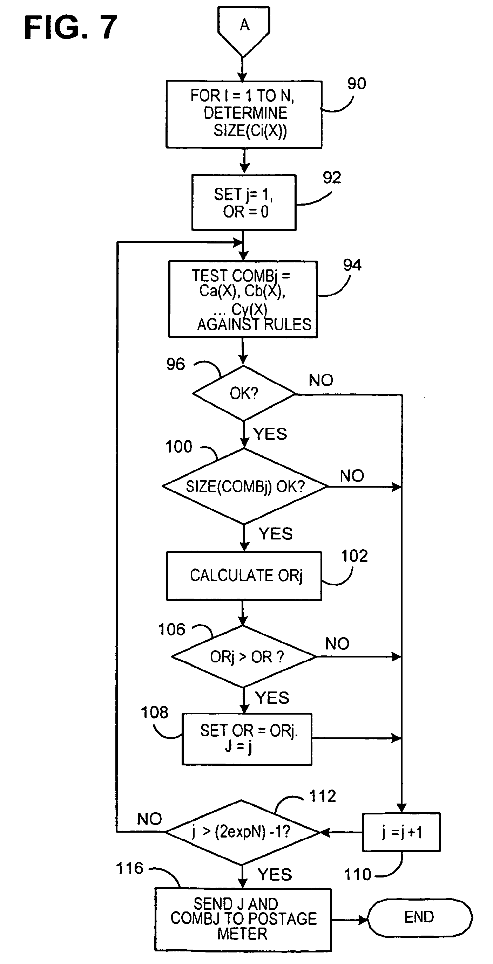

Once estimate $R_i$ is determined at step 74, controller 13 stores $R_i$ and $C_i(X)$; where, in different embodiments of the subject invention, X can be P or F. That is, the descriptors incorporated into indicium IN can be based on either pristine image P or filtered image F. Then, at step 78, controller 13 sets i = i+1 and, at step 80 determines if i > N, where N is the number of algorithms to be evaluated. If so, controller 13 returns to step 66 to process the next algorithm; and otherwise goes to Figure 7.

In Figure 7, at step 90 controller 13 determines the size of all descriptors which have been generated, i.e. the number of bytes required to express each descriptor, and at step 92 sets index j = 1 and variable OR = 0.

Then, at step 94 controller 13 tests the jth combination, $COMB_j = C_a(X), C_b(X), ...C_y(X)$ against predetermined rules. In a preferred embodiment, this is carried out by a table look-up which determines whether or not $COMB_j$ is permitted. Such table can be up dated off-line in response to accumulated experience or heuristic experimentation. As a hypothetical example, the rules might require that a particular descriptor be included in permitted combinations while prohibiting other particular sub-combinations of descriptors. In other embodiments, each combination is logically tested against the rules to determine if the combination is permitted.

Then at step 96, if it is determined that $COMB_j$ is permitted, then at step 100 controller 13 determines if the size of $COMB_j$ is small enough to fit in the available space in indicium IN. If so, then at step 102 controller 13 calculates $OR_j$, the overall robustness of $COMB_j$. Preferably:

$$OR_j = avg(R_a, R_b, ... R_y)$$

Then, at step 106 controller 13 determines if $OR_j >$ OR, and if so at step 108, sets OR = $OR_j$.

Then, or if the results at steps 96, 100 or 106 are negative, at step 110 controller 13 sets j = j+1, and at step 112 determines if j > $2^N-1$, that is if all combinations have been processed. If not, controller 13 returns to step 94 to process the next combination, and otherwise at step 116 sends J and $COMB_J$ to meter 16 for incorporation into indicium IN. The postal facility can then recover J to identify $COMB_J$ and use $COMB_J$ to validate indicium IN as will be described below.

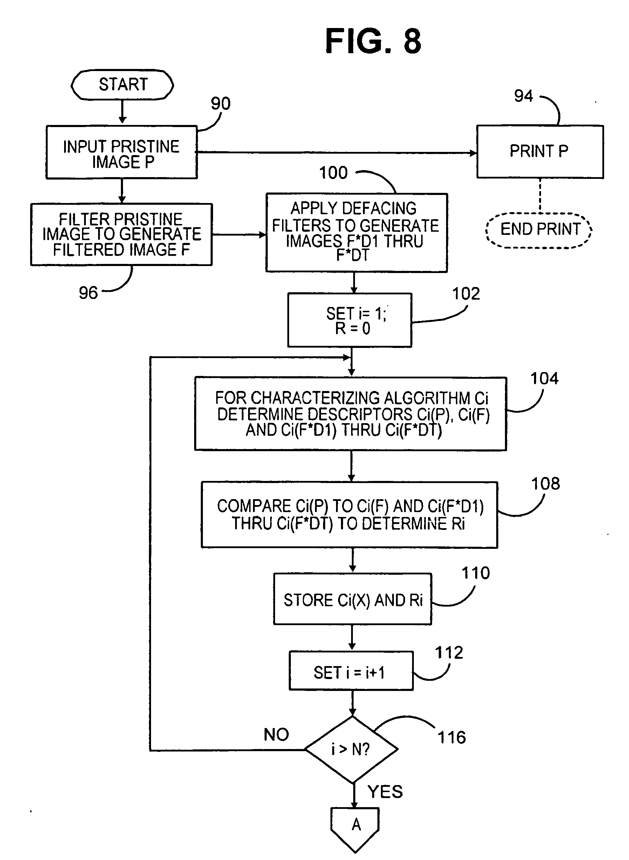

Figure 8 shows a flow diagram of the operation of controller 13 in accordance with another embodiment of the subject invention. Similar to the above described embodiment, at step 90, controller 13 obtains pristine digital image, P, of address block A, at step 94 carries out printing of address block A concurrently with the selection of a characterizing algorithm and, at step 96 inputs a print/scan filter.

At step 100 controller 13 inputs defacing filters $D_1$ through $D_T$ (described above) and applies each of these filters to filtered image F to generate defaced images $F*D_1$ through $F*D_T$ which approximate scanned images of address blocks which have been defaced by occasional events such as blots. At step 102 controller 13 sets index i equal to 1 and variable R equal to 0.

At step 104 controller 13 applies the ith characterizing algorithm $C_i$ to images P, F and $F*D_1$ through $F*D_T$ to generate corresponding descriptors $C_i(P)$, $C_i(F)$ and $C_i(F*D_1)$ through $C_i(F*D_T)$; each comprising a sequence of M characterizations, or values, $C_i(P)_1$ through $C_i(P)_M$: $C_i(F)_1$ through $C_i(F)_M$, etc. Then at step 108, controller 13 compares descriptors $C_i(P)$ with descriptors $C_i(F)$ and $C_i(F*D_1)$ through $C_i(F*D_T)$ to estimate a robustness value $R_i$ for the ith algorithm $C_i$, with respect to a particular image P.

In a preferred embodiment, once descriptors $C_i(P)$ and $C_i(F)$ have been compared an estimate $R_i$ for the robustness of algorithm $C_i$, with respect to particular image P, is calculated as:

$$R_i = \text{Total no. of: } [C_i(P)_j \text{ matching } C_i(F)_j \text{ (for } j = 1 \text{ through } M) +$$

$$C_i(P)_j \text{ matching } C_i(F^*D_k)_j/M \text{ (for } j = 1 \text{ through } M, k = 1 \text{ through } T)]/M(T+1);$$

where M is the number of characterizations generated by $C_i$.

Again similar to the embodiment described above, once estimate $R_i$ is determined at step 110 controller 13 stores $C_i(X)$ (where again X can be either P or F depending upon the embodiment) and $R_i$. At step 112, controller 13 sets i = i+1, and at step 116 determines if i+1 is greater than N, the number of characterizing algorithms stored. If not, controller 13 returns to step 104 to test the next algorithm. Otherwise, at step 120, controller 13 goes to Figure 7 and continues as described above.

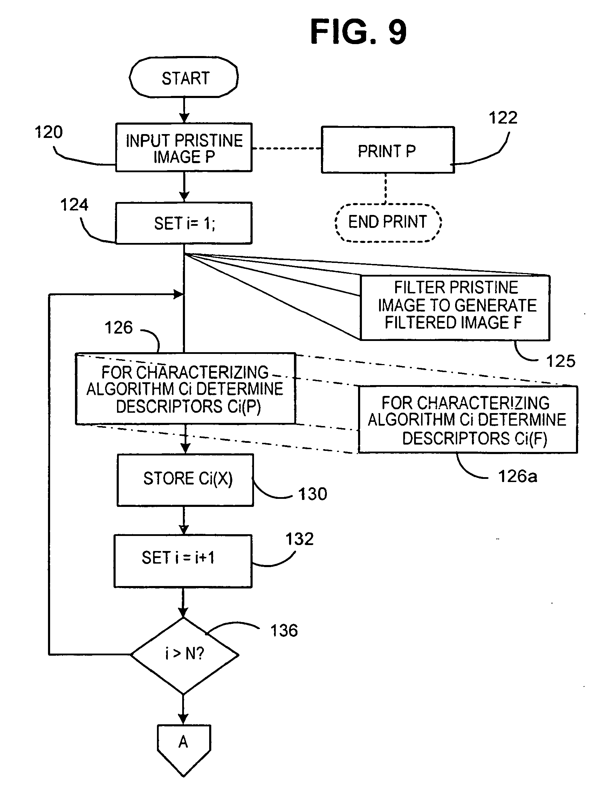

Figure 9 shows a flow diagram of the operation of controller 13 in accordance with another embodiment of the subject invention in which estimates of the robustness of algorithms $C_i$ have been previously obtained and stored. Such estimates can be predetermined on the basis of experience with use or heuristic experimentation, or in any other convenient manner. Again, at step 120 controller 13 obtains pristine digital image, P. of address block A, at step 122 carries out printing of address block A concurrently with the selection of a characterizing algorithm and, at step 124 sets index i = 1.

In a preferred embodiment, at step 126, controller 13 applies algorithm $C_i$ to image P to generate descriptor $C_i(P)$. In another embodiment, additional step 125 is carried out immediately after step 124 to generate filtered image F, and step 126a is substituted for step 126 to generate descriptor $C_i(F)$. At step 130, controller 13 stores $C_i(X)$ (where again X can be either P or F depending upon the embodiment). At step 132 controller 13 sets i=i+1 and at step 136 determines if i+1 is greater than N, the number of characterizing algorithms stored. If not, controller 13 returns to step 126 (or 126a depending upon the embodiment) to test the next algorithm. Otherwise, at step 136, controller 13 goes to Figure 7 and continues as described above.

It is anticipated that other estimates for robustness of characterizing algorithms will be developed as experience with different applications is gained or will be apparent to those skilled in the art. Accordingly, it should be understood that, except for particular recitations in the claims below, details of particular estimates used form no part of the subject invention.

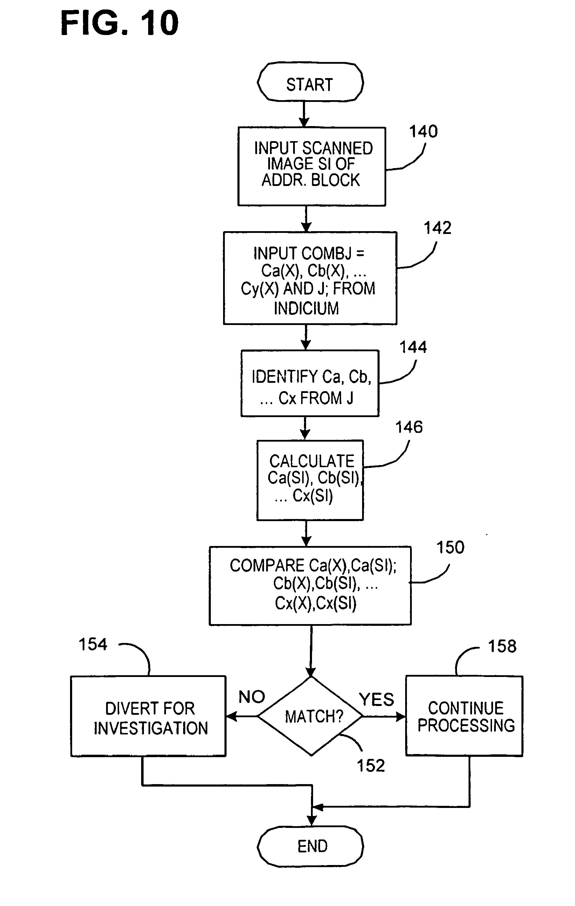

Figure 10 shows a flow diagram of the operation of verification system 30 in verifying indicium IN. After envelope E is scanned by camera 27, at step 140 verification controller 125 inputs a digital scanned image SI of address block A, and at step 142 inputs $COMB_J = C_a(X), C_b(X), ...C_y(X)$ and index value J. At step 144 controller 25 identifies algorithms $C_a, C_b, ...C_y$ from index value J, at step 146 calculates descriptors $C_a(SI), C_b(SI), ...C_y(SI)$, and at step 150 compares corresponding descriptors. At step 152, if the descriptors do not match controller 25 activates diverter 29 at step 154 to divert envelope E for inspection; and otherwise, at step 158 sends envelope E on for normal processing.

At step 150, in a preferred embodiment, the descriptors are determined not to match if any pair of characterizations do not match. That is if for any i,k the characterizations Ci(X)k, Ci(SI)k do not match then at step 152 no match is found. Preferably comparisons are made using comparison algorithms associated with each of characterizing algorithms Ci, and stores in data store 28. In other embodiments, a predetermined threshold number of characterizations which fail to match is required before no overall match is found. In still other embodiments, this threshold may vary between 1 and another predetermined value or values associated with particular combinations j and stored in data store 28. In other embodiments threshold values are specified in indicium IN.

The embodiments described above and illustrated in the attached drawings have been given by way of example and illustration only. From the teachings of the present application those skilled in the art will readily recognize numerous other embodiments in accordance with the present invention. Accordingly, limitations on the present invention are to be found only in the claims set forth below.

**Claims**

1. A method for generating characterizing information for a selected block of printed material, where said printed material is to be scanned from an object and compared with said characterizing information at a location distant from where said block is printed, said method comprising the steps of:

   a) printing said block on an object;
   b) applying each algorithm from a predetermined set of characterizing algorithms to a pristine image of said block of printed material to generate a plurality of corresponding first characterizing information descriptors for said block;

c) determining estimates of robustness for each of said algorithms; and

d) selecting, as a function of said estimates, a combination of descriptors generated by a corresponding combination of said algorithms as said characterizing information.

**2.** A method as described in claim 1 where said step c) comprises the sub-steps of:

c1) filtering said pristine digital image of said block of printed material with a print/scan filter to create a filtered image, said print/scan filter simulating the expected transformation of said pristine image by printing and scanning processes;

c2) applying each algorithm from said predetermined set of characterizing algorithms to said filtered image to generate a plurality of corresponding second characterizing information descriptors for said filtered digital image; and

c3) for each algorithm from said predetermined set of characterizing algorithms, comparing corresponding said first and said second descriptors to determine said estimates of robustness.

**3.** A method as described in claim 1 where said step c) comprises the sub-steps of:

c1) filtering said pristine digital image of said block of printed material with a print/scan filter to create a filtered image, said print/scan filter simulating the expected transformation of said pristine image by printing and scanning processes;

c2) further filtering said filtered image with one or more defacing filters, said defacing filters simulating simulate blots, smudges, failure of print elements or scanner sensors, or other, similar occasional events which can not easily be incorporated into said print/scan filter to create one or more defaced images;

c3) applying each algorithm from said predetermined set of characterizing algorithms to said filtered image and to said one or more defaced images to generate a plurality of corresponding second characterizing information descriptors for said filtered digital image and one or more pluralities of defaced image descriptors corresponding to each of said one or more defaced images; and

c4) for each algorithm from said predetermined set of characterizing algorithms, comparing corresponding first characterizing information descriptors with corresponding second characterizing information descriptors and with each of said one or more corresponding defaced image descriptors to determine said estimates of robustness.

**4.** A method as described in claim 2 or claim 3 where said selected combination of descriptors comprises said second descriptors.

**5.** A method as described in claim 1 where said estimates are predetermined and stored for said algorithms.

**6.** A method as described in claim 1 where said object is a mail piece and said block of printed material represents an address.

**7.** A method as described in claim 6 where said selected combination of descriptors is comprised in an indicium printed on said mail piece; whereby said selected combination can be recovered from said indicium for use at said remote location.

**8.** A method as described in claim 7 where said indicium further comprises information identifying said combination.

**9.** A method as described in claim 1 where selection of said combination is further based upon said descriptors' sizes.

**10.** A method as described in claim 1 where selection of said combination is further based upon predetermined rules.

**Patentansprüche**

**1.** Verfahren zum Erzeugen einer Kennzeichnungsinformation für einen ausgewählten Block eines Druckmaterials, wobei das Druckmaterial von einem Objekt abzutasten ist und mit der Kennzeichnungsinformation an einem Ort zu vergleichen ist, welcher davon entfernt ist, wo der Block gedruckt wird, wobei das Verfahren die Schritte enthält:

a) Drucken des Blocks auf einem Objekt;

b) Anwenden eines jeden Algorithmus aus einem vorbestimmten Satz von Kennzeichnungs-Algorithmen auf ein ursprüngliches Bild des Blocks von Druckmaterial, um eine Mehrzahl von entsprechenden ersten Kennzeichnungsinformations-Deskriptoren für den Block zu erzeugen;

c) Bestimmen von Robustheit-Abschätzungen für jeden der Algorithmen; und

d) Auswählen, als eine Funktion der Abschätzungen, von einer Kombination von Deskriptoren, welche durch eine entsprechende Kombination der Algorithmen erzeugt werden, als die Kennzeichnungsinformation.

2. Verfahren nach Anspruch 1, bei welchem der Schritt c) die Unterschritte enthält:

c1) Filtern des ursprünglichen digitalen Bildes des Blocks von Druckmaterial mit einem Druck/Abtast-Filter, um ein gefiltertes Bild zu erzeugen, wobei der Druck/Abtast-Filter die erwartete Transformation des ursprünglichen Bildes durch Druck- und Abtast-Prozesse simuliert;

c2) Anwenden jedes Algorithmus aus dem vorbestimmten Satz von Kennzeichnungs-Algorithmen auf das gefilterte Bild, um eine Mehrzahl von entsprechenden zweiten Kennzeichnungsinformations-Deskriptoren für das gefilterte digitale Bild zu erzeugen; und

c3) Vergleichen, für jeden Algorithmus aus dem vorbestimmten Satz von Kennzeichnungs-Algorithmen, von entsprechenden des ersten und des zweiten Deskriptors, um die Robustheit-Abschätzungen zu bestimmen.

3. Verfahren nach Anspruch 1, bei welchem der Schritt c) die Unterschritte enthält:

c1) Filtern des ursprünglichen digitalen Bildes des Blocks von Druckmaterial mit einem Druck/Abtast-Filter, um ein gefiltertes Bild zu erzeugen, wobei der Druck/Abtast-Filter die erwartete Transformation des ursprünglichen Bildes durch Druck- und Abstast-Prozesse simuliert;

c2) weiteres Filtern des gefilterten Bildes mit einem oder mehreren Entstellungs-Filtern, wobei die Entstellungs-Filter simulierte Kleckse, Flecken, einen Fehler von Druckelementen oder Abtast-Sensoren, oder weitere ähnliche Gelegenheitsereignisse simulieren, welche nicht einfach in dem Druck/Abtast-Filter einbezogen werden können, um ein oder mehrere entstellte Bilder zu erzeugen;

c3) Anwenden jedes Algorithmus aus dem vorbestimmten Satz von Kennzeichnungs-Algorithmen auf das gefilterte Bild und auf das eine oder die mehreren entstellten Bilder, um eine Mehrzahl von entsprechenden zweiten Kennzeichnungsinformations-Deskriptoren für das gefilterte digitale Bild und eine oder mehrere Vielfalten von entstellen Bild-Deskriptoren entsprechend jedem von dem einen oder den mehreren entstellten Bildern zu erzeugen; und

c4) Vergleichen, für jeden Algorithmus aus dem vorbestimmten Satz von Kennzeichnungs-Algorithmen, von entsprechenden ersten Kennzeichnungsinformations-Deskriptoren mit entsprechenden zweiten Kennzeichnungsinformations-Deskriptoren und mit jedem aus dem einen oder den mehreren entsprechenden entstellten Bild-Deskriptoren, um die Robustheit-Abschätzungen zu bestimmen.

4. Verfahren nach Anspruch 2 oder 3, bei welchem die ausgewählte Kombination von Deskriptoren die zweiten Deskriptoren enthält.

5. Verfahren nach Anspruch 1, bei welchem die Abschätzungen für die Algorithmen vorbestimmt und gespeichert werden.

6. Verfahren nach Anspruch 1, bei welchem das Objekt ein Poststück ist und der Block von Druckmaterial eine Adresse darstellt.

7. Verfahren nach Anspruch 6, bei welchem die ausgewählte Kombination von Deskriptoren in einem Freimachungsvermerk enthalten ist, welcher auf das Poststück gedruckt wird, wobei die ausgewählte Kombination aus dem Freimachungsvermerk zur Verwendung an dem entfernten Ort wiedererlangt werden kann.

8. Verfahren nach Anspruch 7, bei welchem der Freimachungsvermerk ferner eine Information enthält, welche die Kombination identifiziert.

9. Verfahren nach Anspruch 1, bei welchem eine Auswahl von der Kombination ferner auf den Deskriptoren-Größen basiert.

10. Verfahren nach Anspruch 1, bei welchem die Auswahl von der Kombination ferner auf vorbestimmten Regeln basiert.

**Revendications**

1. Procédé pour produire des informations caractérisantes d'un bloc sélectionné de matériau imprimé, dans lequel ledit matériau imprimé doit être numérisé à partir d'un objet et comparé auxdites informations caractérisantes au niveau d'une position qui est distante de la position au niveau de laquelle ledit bloc est imprimé, ledit procédé comprenant les étapes consistant à :

   a) imprimer ledit bloc sur un objet ;
   b) appliquer chaque algorithme appartenant à un ensemble prédéterminé d'algorithmes caractérisants sur une image vierge dudit bloc de matériau imprimé, dans le but de générer une multitude de premiers descripteurs d'informations caractérisantes correspondants pour ledit bloc ;
   c) déterminer des estimations de robustesse pour chacun desdits algorithmes ; et
   d) sélectionner, en fonction desdites estimations, une combinaison de descripteurs générée par une combinaison correspondante desdits algorithmes en tant que lesdites informations caractérisantes.

2. Procédé selon la revendication 1, dans lequel l'étape c) comprend les étapes secondaires consistant à :

   c1) filtrer ladite image numérique vierge dudit bloc de matériau imprimé avec un filtre d'impression / numérisation, dans le but de créer une image filtrée, ledit filtre d'impression / numérisation simulant la transformation escomptée de ladite image vierge par des processus d'impression et de numérisation;
   c2) appliquer chaque algorithme appartenant audit ensemble prédéterminé d'algorithmes caractérisants sur ladite image filtrée, dans le but de générer une pluralité de deuxièmes descripteurs d'informations caractérisantes correspondants pour ladite image numérique filtrée; et
   c3) pour chaque algorithme appartenant audit ensemble prédéterminé d'algorithmes caractérisants, comparer lesdits premiers et lesdits deuxièmes descripteurs correspondants, dans le but de déterminer lesdites estimations de robustesse.

3. Procédé selon la revendication 1, dans lequel l'étape c) comprend les étapes secondaires consistant à :

   c1) filtrer ladite image numérique vierge dudit bloc de matériau imprimé avec un filtre d'impression / numérisation, dans le but de créer une image filtrée, ledit filtre d'impression / numérisation simulant la transformation escomptée de ladite image vierge par des processus d'impression et de numérisation ;
   c2) poursuivre le filtrage de ladite image filtrée avec un ou plusieurs filtres dé défaçage, lesdits filtres de défaçage simulant des pâtés, des frisotages simulés, une défaillance d'éléments d'impression ou de capteurs de numérisation, ou bien d'autres événements similaires occasionnels qui ne peuvent pas être incorporés facilement dans ledit filtre d'impression / numérisation, dans le but de créer une ou plusieurs images défacées ;
   c3) appliquer chaque algorithme appartenant audit ensemble prédéterminé d'algorithmes caractérisants sur ladite image filtrée, et sur ladite une ou sur lesdites plusieurs images défacées, dans le but de générer une pluralité de deuxièmes descripteurs d'informations caractérisantes correspondants pour ladite image numérique filtrée, et une ou plusieurs pluralités de descripteurs d'images défacées correspondant à chacune de ladite une ou desdites plusieurs images défacées; et
   c4) pour chaque algorithme appartenant audit ensemble prédéterminé d'algorithmes caractérisants, comparer des premiers descripteurs d'informations caractérisantes correspondants à des deuxièmes descripteurs d'informations caractérisantes correspondants, et à chacun dudit un ou desdits plusieurs descripteurs d'images défacées correspondants, dans le but de déterminer lesdites estimations de robustesse.

4. Procédé selon la revendication 2 ou la revendication 3, dans lequel ladite combinaison sélectionnée de descripteurs comprend lesdits deuxièmes descripteurs.

5. Procédé selon la revendication 1, dans lequel lesdites estimations sont prédéterminées et enregistrées pour lesdits algorithmes.

6. Procédé selon la revendication 1, dans lequel ledit objet est un pli postal, et ledit bloc de matériau imprimé représente une adresse.

7. Procédé selon la revendication 6, dans lequel ladite combinaison sélectionnée de descripteurs est comprise dans un signe imprimé sur ledit pli postal ; moyennant quoi ladite combinaison sélectionnée peut être retrouvée à partir dudit signe pour une utilisation au niveau de ladite position distante.

8. Procédé selon la revendication 7, dans lequel ledit signe comprend par ailleurs des informations identifiant ladite combinaison.

9. Procédé selon la revendication 1, dans lequel une sélection de ladite combinaison est basée par ailleurs sur les dimensions desdits descripteurs.

10. Procédé selon la revendication 1, dans lequel une sélection de ladite combinaison est basée par ailleurs sur des règles prédéterminées.

10

ADDRESS
PRINTER
CONTROLLER  12

POSTAGE
METER  16

ADDRESS
PRINTER  14

INDICIA PRINTER  20

IN

E

E     A

E     A

# FIG. 1
PRIOR ART

# FIG. 2

MANUAL INVESTGATION

**FIG. 3**

**FIG. 4**

**Danny A. Lelli**

**30 Clark Ave.**

**Derby, CT 06418**

**FIG. 5**

# FIG. 6

START

60 — INPUT PRISTINE IMAGE P

62 — PRINT P

END PRINT

64 — FILTER PRISTINE IMAGE TO GENERATE FILTERED IMAGE F

66 — SET i = 1; R = 0

70 — FOR CHARACTERIZING ALGORITHM Ci DETERMINE DESCRIPTORS Ci(P) AND Ci(F)

72 — COMPARE Ci(P) AND Ci(F) TO DETERMINE Ri

74 — STORE Ci(X) AND Ri

78 — SET i = i+1

80 — i > N?

NO

YES

A

## FIG. 7

A

FOR I = 1 TO N,
DETERMINE
SIZE(Ci(X))          90

SET j= 1,
OR = 0               92

TEST COMBj =
Ca(X), Cb(X),
... Cy(X)
AGAINST RULES        94

96   OK?         NO

YES

100   SIZE(COMBj) OK?    NO

YES

CALCULATE ORj    102

106   ORj > OR ?    NO

YES

108   SET OR = ORj.
J = j

112   j > (2expN) -1?    j = j +1   110

NO

YES

116   SEND J AND
COMBJ TO POSTAGE
METER            END

# FIG. 8

START

INPUT PRISTINE
IMAGE P
90

PRINT P
94

FILTER PRISTINE
IMAGE TO GENERATE
FILTERED IMAGE F
96

APPLY DEFACING
FILTERS TO GENERATE
IMAGES F*D1 THRU
F*DT
100

END PRINT

SET i= 1;
R = 0
102

FOR CHARACTERIZING ALGORITHM Ci
DETERMINE DESCRIPTORS Ci(P), Ci(F)
AND Ci(F*D1) THRU Ci(F*DT)
104

COMPARE Ci(P) TO Ci(F) AND Ci(F*D1)
THRU Ci(F*DT) TO DETERMINE Ri
108

STORE Ci(X) AND Ri
110

SET i = i+1
112

NO          i > N?          116

YES

A

EP 1 544 790 B1

# FIG. 9

START

120 — INPUT PRISTINE IMAGE P········PRINT P — 122

124 — SET i= 1;

END PRINT

FILTER PRISTINE IMAGE TO GENERATE FILTERED IMAGE F

125

126 — FOR CHARACTERIZING ALGORITHM Ci DETERMINE DESCRIPTORS Ci(P)

FOR CHARACTERIZING ALGORITHM Ci DETERMINE DESCRIPTORS Ci(F)

126a

STORE Ci(X) — 130

SET i = i+1 — 132

i > N? — 136

A

19

# FIG. 10

```
                    ┌──────────┐
                    │  START   │
                    └────┬─────┘
                         │
              ┌──────────▼──────────┐
              │  INPUT SCANNED      │   140
              │  IMAGE SI OF        │
              │  ADDR. BLOCK        │
              └──────────┬──────────┘
                         │
              ┌──────────▼──────────┐
              │  INPUT COMBJ =      │   142
              │  Ca(X), Cb(X), ...  │
              │  Cy(X) AND J; FROM  │
              │  INDICIUM           │
              └──────────┬──────────┘
                         │
              ┌──────────▼──────────┐
              │  IDENTIFY Ca, Cb,   │   144
              │  ... Cx FROM J      │
              └──────────┬──────────┘
                         │
              ┌──────────▼──────────┐
              │  CALCULATE          │   146
              │  Ca(SI), Cb(SI),    │
              │  ... Cx(SI)         │
              └──────────┬──────────┘
                         │
         ┌───────────────▼───────────────┐
         │  COMPARE Ca(X),Ca(SI);        │   150
         │  Cb(X),Cb(SI), ...            │
         │  Cx(X),Cx(SI)                 │
         └───────────────┬───────────────┘
```

$COMBJ = Ca(X), Cb(X), \ldots Cy(X)$ AND $J$; FROM INDICIUM

IDENTIFY $Ca, Cb, \ldots Cx$ FROM $J$

CALCULATE $Ca(SI), Cb(SI), \ldots Cx(SI)$

COMPARE $Ca(X),Ca(SI)$; $Cb(X),Cb(SI), \ldots Cx(X),Cx(SI)$

154

DIVERT FOR INVESTIGATION ◄── NO ── MATCH? ── YES ──► CONTINUE PROCESSING 158

152

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040128254 A
- US 20010040979 A1

- US 20030053653 A1

### Non-patent literature cited in the description

- Handbook of Pattern Recognition and Image Processing. Academic Press, 1986